Europäisches Patentamt

European Patent Office

Office européen des brevets

(11) Publication number: **0 253 550**
**A2**

# EUROPEAN PATENT APPLICATION

(21) Application number: 87305969.5

(22) Date of filing: 06.07.87

(51) Int. Cl.⁴: **A23L 2/10** , A23L 1/08

(30) Priority: 07.07.86 AU 6774/86

(43) Date of publication of application:
20.01.88 Bulletin 88/03

(84) Designated Contracting States:
ES FR IT

(71) Applicant: CHATEAU YALDARA PTY. LTD.

Lyndoch South Australia(AU)

(72) Inventor: Thumm, Hermann John
Lyndoch
South Australia(AU)

(74) Representative: Gore, Peter Manson et al
W.P. THOMPSON & CO. Coopers Building
Church Street
Liverpool L1 3AB(GB)

(54) **Grape honey.**

(57) Grape juice concentrated at a temperature between 40°C and 80°C under high vacuum conditions until its Baume reaches the level of from 50 to 65, and packaged into containers, preferably while at an elevated temperature. At that concentration, the product is a honey-like syrup.

EP 0 253 550 A2

## GRAPE HONEY

This invention relates to a method of production of a new edible product made from grapes, and having a honey-like flavour, and also relates to a product produced by that method (which could be regarded as "grape honey").

Honey is a product containing about 40% fructose and 40% glucose, and a number of mineral and vitamin supplements, including potassium, chlorine, sulphur, calcium, sodium, phosphorus, magnesium, silicon, iron, manganese, copper, nickel, boron, aluminium and iodine. It also contains traces of Vitamin A, Vitamins B and B Complex, and Vitamins D and E. Honey is not necessarily a hygienic substance, although absence of hygiene has been found to be acceptable to the market.

It has now been found possible to provide a method of production of a product which, like honey, is pleasant to taste, and which has substantially similar quantities of fructose and glucose, and also has most of the mineral and vitamin constituents of honey. It has also been found possible to make a product by a method whereby the product flavour can be varied by simple variation of ingredients.

In one embodiment of this invention, grape juice is first clarified, if necessary, and then concentrated at a temperature from 40°C to 80°C under high vacuum conditions until its Baume reaches the level of from 50 to 65, and packaged into containers, preferably while at an elevated temperature, and closing the containers. At that concentration, the product is a honey-like syrup.

The high vacuum conditions are usually from 175 to 210 kPa (25 to 30 inches per square inch). The pressure and temperature conditions under which the grape juice is concentrated avoid imparting a "cooked flavour" to the product.

The flavour of the product is very similar to honey, but can be varied by varying the grape variety of the grape juice, and if required small quantities of honey, or preferably, of other aromatic fruit juices, can be added for aromatic purposes. However, the product is somewhat similar to honey, both in consistency and taste, and it has substantially the same valuable ingredients but can be prepared to have a much higher degree of hygiene. In certain respects, it contains larger quantities of nourishing food constituents than honey.

Preferably, the pH of the grape juice is increased to exceed 3, and the grape juice is clarified before concentrating. Examples of materials which may be used to increase the pH are sodium carbonate and sodium bicarbonate. An example of a material which may be used to clarify the grape juice is bentonite.

An embodiment is described hereunder in some detail but it will be seen that the invention need not necessarily be limited to any one or combination of the further details of this embodiment.

In this embodiment, grape juice of from 10 to 18 Baume is first clarified by adding bentonite at the rate of 1 kg per 1000 litres, and deacidified with a sodium carbonate or bicarbonate ($Na_2Co_3$ or $NaHCO_3$) in sufficient quantity to neutralise most of the acid and bring the pH of the grape juice to approximately 4 to 5 (but preferably always exceeding 4). The grape juice is allowed to stand until clear, and when clear it is drained off, heated at low pressure to from 45°C to 70°C to concentrate to a sugar content of from 25 to 30 Baume, and kept in cold storage until required for further concentration. (This intermediate storage step may be omitted).

The initially concentrated grape juice is withdrawn from cold storage when required, and again heated to a temperature of from 45°C to 70°C while under a vacuum of from 175 to 210 kPa (from 25 to 30 pounds per square inch). Under these circumstances the moisture is evaporated, and the concentration is continued until the product reaches a 50-62 Baume, whereupon it is containerised while still at the 65°C direct from the vacuum plant to the filling plant, thus ensuring a sterile filling. No preserving agents are required. However, it can also be containerised at normal temperature.

In some instances, obviously the intermediate stage of initial concentration to 25 to 30 Baume and cold storage can be dispensed with.

At 50-62 Baume, the grape honey is self-preserving. Bacteria or yeast cells are unable to withstand the hygroscopic pressure conditions existing at that density, in the same way as they do not multiply in honey.

It is desirable to avoid the addition of artificial flavour, although an aromatic fruit or a small percentage of natural honey can be added for aromatic purposes if required. While synthetic materials can be added, it is deemed desirable to avoid such additions.

The final product has a flavour which is somewhat like that of honey, since it contains substantially the same amounts of fructose and glucose, and most of the other substances of honey. However, the grape honey is much cleaner and appears to be so, since natural honey is usually cloudy due to impurities which are absent in the grape honey.

## TABLE

According to one independent test carried out for the inventor, a typical grape juice concentrate of this invention was tested, and yielded the following results:

GRAPE JUICE CONCENTRATE

% Water 12.5
% Protein N x 5, 7 1.0
N x 6, 25 1.1
N x 6, 38 1.2
% Enzymatic Saccharose 0.03 ·
% Saccharose 4.0
% Enzymatic Glucose 41.8
% Enzymatic Fructose 42.8
% Ash 900°C 0.63
500°C 1.2
% Total Sugar inversion 88.3
without inversion92.6
% Enzymatic Maltose 0.3
% Starch 0.8
% Fat 0.02

The method of this invention results in a new and valuable product with desirable and acceptable characteristics.

## Claims

1. A method of producing a grape juice concentrate comprising:

(a) clarifying grape juice, if necessary,

(b) subjecting the grape juice to a temperature of from 40°C to 80°C under vacuum conditions of from 175 to 210 kPa (from 25 to 30 pounds per square inch) until it reaches a Baume of from 50 to 65, and

(c) packaging the concentrated grape juice in containers and closing the containers.

2. A method according to claim 1, wherein the clarifying of the grape juice is effected by adding bentonite, and draining the grape juice from the bentonite when the grape juice is clear.

3. A method according to claim 1 or 2, wherein said grape juice has a sweetness of from 10 to 18 Baume before being subjected to the temperature under the vacuum conditions.

4. A method according to any of claims 1 to 3, wherein the grape juice concentrate is packaged while at elevated temperature.

5. A method according to claim 1, wherein there is an intermediate stage of subjecting the grape juice to a temperature of from 45°C to 70°C under vacuum conditions of from 175 to 210 kPa (from 25 to 30 pounds per square inch) until it reaches a Baume of from 25 to 30, storing under cold storage conditions, and withdrawing it for further processing in accordance with steps (b) and (c) as defined in claim 1.

6. A method according to claim 1, wherein the pH of the grape juice is increased to exceed 3 before subjecting it to the temperature and pressure conditions of step (b) as defined in claim 1.